# EUROPEAN PATENT APPLICATION

(11) **EP 4 738 142 A1**
(43) Date of publication of application: **06.05.2026**
(21) Application number: 25180622.0
(22) Date of filing: 04.06.2025
(51) Int. Cl.: G06F 16/27

(54) **DATA SYNCHRONIZATION METHOD AND APPARATUS BASED ON DATABASE, MEDIUM, AND DEVICE**

(30) Priority: 30.10.2024 CN 202411535621
(71) Applicant: Beijing Volcano Engine Technology Co., Ltd., Beijing 100190 (CN)
(72) Inventor: DENG, Yun, Beijing, 100028 (CN)
(74) Representative: Grünecker Patent- und Rechtsanwälte PartG mbB

(57) **Abstract**

The present disclosure relates to a data synchronization method and apparatus based on a database, a medium, a device and a product. The method includes: executing, in the database, a target statement carrying a current data synchronization position, to write the current data synchronization position into a log file of the database through the target statement, the target statement is a statement of a data definition language type (110); searching in the log file of the database to obtain a target data synchronization position in response to data breakpoint resumption being performed, the target data synchronization position is the current data synchronization position recorded when data synchronization is interrupted last time (120); and performing data synchronization based on the target data. synchronization position (130).

## Description

### CROSS-REFERENCE TO RELATED APPLICATION

This application claims the priority to and benefits of the Chinese Patent Application, No. 202411535621.X, which was filed on October 30, 2024. The aforementioned patent application is hereby incorporated by reference in its entirety.

### TECHNICAL FIELD

The present disclosure relates to a data synchronization method and apparatus based on a database, a medium, a device and a product.

### BACKGROUND

In a data synchronization process, current synchronized position information needs to be continuously recorded. When the data synchronization is interrupted due to a network problem, a system failure or other reasons, a system needs to be able to detect this situation and save current position information. After a problem causing the interruption is solved, the system can use the previously saved position information to resume the data synchronization. Therefore, recording of the position information is very important for breakpoint resumption.

In the related art, positions used in MySQL (a relational database management system) include a physical position based on a binary file name and an offset, and a logical position based on a GTID/GTIDSet. However, in a scenario of master-slave switch, physical locations of a master database and a slave database are different, and thus the physical position based on the binary file name and the offset becomes invalid when the master-slave switch is performed. Although the logical position based on the GTID/GTIDSet can solve a problem of position invalidation caused by the master-slave switch, a low version of MySQL does not support the logical position based on the GTID/GTIDSet. Therefore, it is urgently needed to provide a new data synchronization method that can adapt to various versions of MySQL and solve the problem of position invalidation caused by the master-slave switch.

### SUMMARY

The Summary is provided to introduce concepts in a brief form, and these concepts will be described in detail in the Detailed Description section below. The Summary is not intended to identify key features or essential features of the claimed technical solution, nor is it intended to be used to limit the scope of the claimed technical solution.

In a first aspect, the present disclosure provides a data synchronization method based on a database, including:
executing, in the database, a target statement carrying a current data synchronization position, to write the current data synchronization position into a log file of the database through the target statement, where the target statement is a statement of a data definition language type;
searching the log file of the database to obtain a target data synchronization position in response to data breakpoint resumption being performed, where the target data synchronization position is the current data synchronization position recorded when data synchronization is interrupted last time; and
performing data synchronization based on the target data synchronization position.

In a second aspect, the present disclosure provides a data synchronization apparatus based on a database, including:
an execution module, configured to execute, in the database, a target statement carrying a current data synchronization position, to write the current data synchronization position into a log file of the database through the target statement, where the target statement is a statement of a data definition language type;
a search module, configured to search the log file of the database to obtain a target data synchronization position in response to data breakpoint resumption being performed, where the target data synchronization position is the current data synchronization position recorded when data synchronization is interrupted last time; and
a synchronization module, configured to perform data synchronization based on the target data synchronization position.

In a third aspect, the present disclosure provides a computer-readable medium, storing a computer program thereon, the computer program, when executed by a processing apparatus, implements the steps of the method according to the first aspect.

In a fourth aspect, the present disclosure provides an electronic device, including:
a storage apparatus, storing a computer program thereon; and
a processing apparatus, configured to execute the computer program in the storage apparatus, to implement the steps of the method according to the first aspect.

In a fifth aspect, the present disclosure provides a computer program product, including a computer program which, when executed by a processor, implements the steps of the method according to the first aspect.

Other features and advantages of the present disclosure will be described in detail in the Detailed Description section below.

### BRIEF DESCRIPTION OF DRAWINGS

The above and other features, advantages and aspects of the embodiments of the present disclosure will become more apparent when taken in conjunction with the drawings and with reference to the following detailed description. Throughout the drawings, the same or similar reference numerals represent the same or similar elements. It should be understood that the drawings are schematic and that parts and elements are not necessarily drawn to scale. In the drawings:
Fig. 1 is a flowchart of a data synchronization method based on a database according to some embodiments;
Fig. 2 is a detailed flowchart of step 120 shown in Fig. 1;
Fig. 3 is a structural diagram of a data synchronization apparatus based on a database according to some embodiments; and
Fig. 4 is a structural diagram of an electronic device according to some embodiments.

### DETAILED DESCRIPTION

The embodiments of the present disclosure will be described in more detail below with reference to the drawings. Although some embodiments of the present disclosure are shown in the drawings, it should be understood that the present disclosure can be implemented in various manners and should not be construed as being limited to the embodiments set forth herein. On the contrary, these embodiments are provided for a more thorough and complete understanding of the present disclosure. It should be understood that the drawings and embodiments of the present disclosure are only for illustrative purposes, and are not intended to limit the protection scope of the present disclosure.

It should be understood that various steps described in the method implementations of the present disclosure may be performed in different orders and/or in parallel. Furthermore, the method implementations may include additional steps and/or may omit the execution of the illustrated steps. The scope of the present disclosure is not limited in this respect.

As used herein, the term "include/comprise" and its variants are open-ended inclusions, that is, "include/comprise but not limited to". The term "based on" is "based, at least in part, on". The term "an embodiment" represents "at least one embodiment"; the term "another embodiment" represents "at least one additional embodiment"; and the term "some embodiments" represents "at least some embodiments". Relevant definitions of other terms will be given in the following description.
It should be noted that concepts such as "first" and "second" mentioned in the present disclosure are only used to distinguish between different apparatuses, modules or units, and are not used to limit the order or interdependence of the functions performed by these apparatuses, modules or units. It should be noted that the modifications of "one" and "a plurality of" mentioned in the present disclosure are illustrative rather than restrictive, and those skilled in the art should understand that they should be construed as "one or more" unless the context clearly indicates otherwise.

Names of messages or information exchanged between the plurality of apparatuses in the implementations of the present disclosure are only used for illustration, and are not intended to limit the scope of the messages or information.

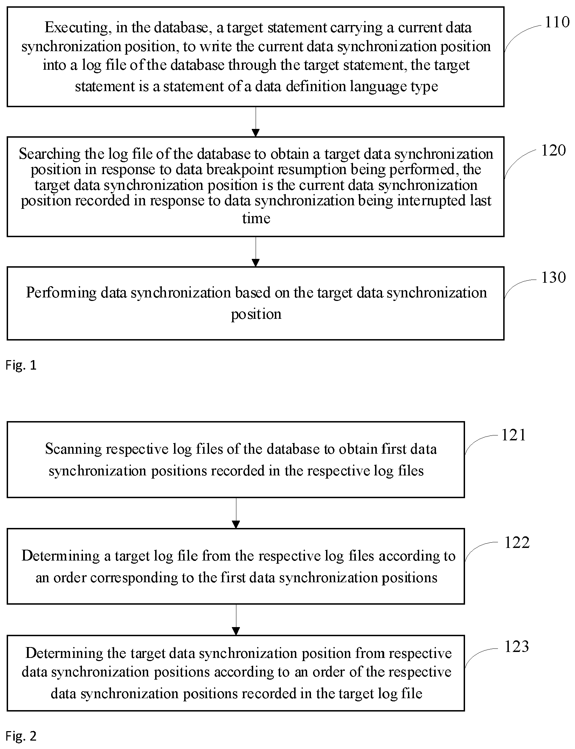

Fig. 1 is a flowchart of a data synchronization method based on a database according to some embodiments. As shown in Fig. 1, the embodiments of the present disclosure provide a data synchronization method based on a database, and the method may be executed by an electronic device, and in particular, may be executed by means of a data synchronization apparatus based on a database. The apparatus may be implemented by means of software and/or hardware, and is configured in the electronic device. It should be understood that the electronic device may be a server. As shown in Fig. 1, the method may include the following steps.

In step 110, executing, in the database, a target statement carrying a current data synchronization bit position, to write the current data synchronization position into a log file of the database through the target statement, the target statement is a statement of a data definition language type.

Here, the database may be a source database. The source database refers to a database at a data starting point. The source database is a database where original data is located, and data is read from the source database and copied or synchronized to another database (a target database). The data synchronization position refers to a mark for recording a current synchronization state in a data synchronization process, and the data synchronization position may be composed of a synchronization time stamp or a log position of data change (such as a binlog (binary log) file name and an offset). The current data synchronization position refers to real-time position information of current data synchronization in the data synchronization process.

The target statement is a statement of a data definition language (Data Definition Language, DDL) type. The DDL statement is one of Structured Query Language (SQL). The DDL statement is used to define and manage the structure of a database, and is generally used to create, modify, and delete database objects, such as a database, a table, a view, an index, a trigger, a stored procedure, and so on.

In the data synchronization process, a target statement carrying a current data synchronization position is executed in the database periodically through a data transmission service (Data Transmission Service, DTS), and the target statement is recorded in a log file of the database, so that the current data synchronization position carried in the target statement is recorded in the log file. The log file may be a binary log (binlog) file.

It should be noted that due to a multi-threaded slave (MTS) mechanism for master-slave replication, data manipulation language (DML) statements are not strictly order-preserving between a master database and a slave database. For example, insert1, insert2, and insert3 are sequentially executed in the source database. Since there is no conflict between the three statements of insert1, insert2, and insert3, the execution order on the slave database may be insert3, insert2, and insert1. Therefore, the DML statements in the master database and the slave database are not order-preserving. Therefore, if a DML statement is used to embed the current data synchronization position in the log file, the data synchronization position will become invalid in the scenario of the master-slave switch.

In the embodiments of the present disclosure, the current data synchronization position is written into the log file through the target statement of the data definition language type. Since the DDL statement has a checkpoint mechanism, the DDL statement is not disordered. In a scenario where the master database fails and switches to the slave database for data synchronization, the slave database will wait for a transaction before the DDL statement to complete, and then execute the DDL statement. After the DDL statement is executed, the statements after the DDL statement are released. Therefore, by writing the current data synchronization position into the log file through the target statement of the data definition language type, a data fence effect can be achieved, so as to ensure that data consistency and integrity can be guaranteed in the data synchronization process in the scenario of the master-slave switch.

In addition, since the DDL statement is a type of SQL statement, various versions of MySQL databases can use the target statement provided in the embodiments of the present disclosure to embed the data synchronization position. For example, MySQL databases of version 5.5 and earlier versions can use the data synchronization method based on a database provided in the embodiments of the present disclosure to record data synchronization positions, so as to support breakpoint resumption in the scenario of the master-slave switch.

It should be noted that the data synchronization position in the embodiments of the present disclosure is a logical position, where the logical position refers to a position defined based on a logical order of data change.

In step 120, searching the log file of the database to obtain a target data synchronization position in response to data breakpoint resumption being performed, the target data synchronization position is the current data synchronization position recorded when data synchronization is interrupted last time .

Here, the data breakpoint resumption refers to that in a data synchronization process, if a transmission is interrupted due to a network problem or other reasons, data that has not been completed can be continuously transmitted from a place where the transmission is interrupted without restarting the entire transmission process. Through the above step 110, in the data synchronization process, the current data synchronization position can be continuously recorded in the log file of the database. When the data synchronization is interrupted due to a network problem, a system failure or other reasons, the current data synchronization position corresponding to a moment of the interruption will also be recorded in the log file.

After the problem that causes the data synchronization interruption is solved, data breakpoint resumption is performed through the data transmission service. When the data breakpoint resumption is performed, the target data synchronization position is read from the log file of the database through the data transmission service. The target data synchronization position is the current data synchronization position recorded when the data synchronization is interrupted last time. Exemplarily, the target data synchronization position may be understood as the last data synchronization position recorded in the log file.

In some embodiments, the target statement may be searched from the log file of the database, and then the target data synchronization position is determined through the searched target statement.

In step 130, performing data synchronization based on the target data synchronization position.

Here, the data synchronization based on the target data synchronization position may be performed through the data transmission service. The target data synchronization position includes a binlig file name and an offset of a previous data synchronization interruption. When the data breakpoint resumption is performed, data is re-read from the binlig file and the offset of the previous interruption and synchronized to the target database.

Therefore, by executing, in the database, the target statement carrying the current data synchronization position and belonging to the data definition language type to write the current data synchronization position into the log file of the database through the target statement, and searching the log file of the database to obtain the target data synchronization position when the data breakpoint resumption is performed, and then performing the data synchronization based on the target data synchronization position, a data fence effect can be achieved, and the data synchronization position is prevented from becoming invalid in the scenario of the master-slave switch, so that data consistency and integrity can be guaranteed in the data synchronization process in the scenario of the master-slave switch. Moreover, data synchronization positions can be embedded by means of the target statement belonging to the data definition language, various versions of MySQL databases can also be supported.

In some implementations, the target statement includes a current data synchronization position and a target table name, a table corresponding to the target table name does not belong to the database, and the target statement is used to instruct to delete the corresponding table based on the target table name.

Exemplarily, the target statement may be DROP TABLE IF EXISTS. It should be understood that DROP TABLE IF EXISTS is a statement used to delete a table in the database in the SQL statement. DROP TABLE IF EXISTS is generally followed by table_name to indicate the name of the table that needs to be deleted through table_name. Therefore, the current data synchronization position and the target table name may be carried at the position of table_name.

For example, the target statement may be:
DROP TABLE IF EXISTS ${NOT_EXISTS_TABLE_PREFIX}_${DATA}.
NOT_EXISTS_TABLE_PREFIX represents the target table name that does not belong to the database, and DATA represents the current data synchronization position.

It should be noted that the table corresponding to the target table name does not belong to the database, which means that the table corresponding to the target table name does not exist in the database. The target table name included in the target statement may refer to the entire target table name or a prefix of the target table name.

Accordingly, in step 110, the target statement may be executed in the database to delete the table corresponding to the target table name.

Here, when the target statement is executed, since the table corresponding to the target table name does not exist in the database, the database does not report an error, but silently ignores the deletion operation of the target statement. Therefore, the target statement can be recorded in the log file. Moreover, by means of the target statement for deleting the table in the database, the user will not perceive the operation of deleting the table corresponding to the non-existent target table name. Therefore, writing the current data synchronization position into the log file through the target statement is imperceptible to the user.

Therefore, the data synchronization position can be written into the log file of the database through the above target statement. Moreover, the action of writing the data synchronization position into the log file is imperceptible to the user, which can avoid interference to the user and improve the user experience.

In some implementations, the target statement may include a current data synchronization position and a specified table name, and the target statement is used to instruct to create a corresponding table based on the specified table name.

Exemplarily, the target statement may be CREATE TABLE IF NOT EXISTS. It should be understood that CREATE TABLE IF NOT EXISTS is a statement used to create a new table in the database in the SQL statement. CREATE TABLE IF NOT EXISTS is generally followed by table_name to indicate the name of the table that needs to be created through table name. Therefore, the current data synchronization position and the specified table name may be carried at the position of table name.

The specified table name may refer to a table name defined by the user and dedicated to recording the data synchronization position. For example, the target statement may be: CREATE TABLE IF NOT EXISTS ${TABLE_A}_${DATA}, where TABLE_A is the specified table name, and DATA represents the current data synchronization position.

It should be noted that the specified table name in the target statement executed each time may be different. The specified table name included in the target statement may refer to the entire specified table name or a prefix of the specified table name.

Accordingly, in step 110, the target statement may be executed in the database to create the table corresponding to the specified table name in the database.

Here, when the target statement is executed in the database, if the specified table name does not exist, the table corresponding to the specified table name is created in the database. Therefore, the target statement can be recorded in the log file.

It should be understood that compared with DROP TABLE IF EXISTS, since CREATE TABLE IF NOT EXISTS needs to create a table in the database, the operation of CREATE TABLE IF NOT EXISTS is actually perceptible to the user, while DROP TABLE IF EXISTS is imperceptible to the user.

It should be noted that in the embodiments of the present disclosure, the current data synchronization position may be an increasing sequence number. Certainly, the current data synchronization position may also be a time stamp. In a practical application scenario, the data synchronization position may be defined according to practical situations, but it must be ensured that there is a partial order relationship between the data synchronization positions.

Therefore, through the above target statement, the data synchronization position may be written into the log file of the database by creating the table in the database.

In some implementations, in step 110, the current data synchronization position in the data synchronization process may be acquired periodically, the target statement is constructed based on a preset table name and the current data synchronization position, and the target statement is executed in the database to write the target statement into the log file of the database.

Here, in the data synchronization process, the current data synchronization position in the data synchronization process may be acquired periodically through the data transmission service, so as to record the current data position through the target statement. The interval time of each cycle may be set according to practical situations.

The preset table name may be the target table name or the specified table name described in the above embodiments. The target statement may be constructed by carrying the preset table name and the current data synchronization position in DROP TABLE IF EXISTS or CREATE TABLE IF NOT EXISTS.

Then, the target statement is executed in the database through the data transmission service. It should be noted that the executed target statement will be recorded in the log file of the database, so as to write the data synchronization position carried in the target statement into the log file of the database.

Exemplarily, the preset table name and the current data synchronization position may be written into the corresponding DDL statement to construct the target statement. The target statement may be DROP TABLE IF EXISTS or CREATE TABLE IF NOT EXISTS in the above embodiments.

It should be understood that in the process of performing the data synchronization, the data transmission service periodically acquires the current data synchronization position, and constructs the target statement based on the current data synchronization position and the preset table name, and then executes the target statement in the database.

Therefore, through the above implementations, the target statement may be periodically executed to write the data synchronization position in the data synchronization process into the log file.

Fig. 2 is a detailed flowchart of step 120 shown in Fig. 1. As shown in Fig. 2, in some implementations, step 120 includes the following steps.

In step 121, scanning respective log files of the database to obtain first data synchronization positions recorded in respective log files.

Here, in the above implementation, the data transmission service executes the target statement periodically to write the data synchronization position into the log file of the database. When the breakpoint resumption is performed, each log file of the database is scanned through the data transmission service to obtain the first data synchronization position recorded in each log file.

It should be noted that there is a partial order relationship between the data synchronization positions. For example, the data synchronization position may be an increasing sequence number or time stamp. Therefore, by scanning the first data synchronization position recorded in each log file, the log file where the target data synchronization position is located can be determined through the first data synchronization position recorded in each log file.

In some embodiments, the target statement further includes a preset table name. Accordingly, a first target statement recorded in each log file may be searched in each log file of the database based on the preset table name, and the first data synchronization position recorded in each log file is determined based on the data synchronization position carried in the target statement searched.

The preset table name may be the target table name or the specified table name described in the above embodiments.

In the embodiments of the present disclosure, the data synchronization position is recorded in the target statement of the log file. Therefore, the target statement for recording the data synchronization position can be searched in each log file of the database through the preset table name. Due to the partial order relationship between the data synchronization positions, the first target statement searched in the log file is recorded with the first data synchronization position recorded in the log file.

After the target statement is searched in each log file, the data synchronization position carried in the first target statement searched in each log file may be determined as the first data synchronization position recorded in the log file.

It should be understood that by means of the preset table name, the target statement for recording the data synchronization position can be quickly found in the log file.

In step 122, determining a target log file from the respective log files according to an order corresponding to the first data synchronization positions.

Here, since the data synchronization positions have a partial order relationship, the target log file may be determined from each log file according to the order corresponding to each first data synchronization position. The target log file is the log file where the target data synchronization position for breakpoint resumption is located.

Exemplarily, the log file corresponding to the first data synchronization position with the largest order may be determined as the target log file.

For example, assuming that the scanned first data synchronization positions are 1, 11, 21, and 31, respectively, the log file where the data synchronization position corresponding to 31 is located is the target log file.

In step 123, determining the target data synchronization position from respective data synchronization positions according to an order of the respective data synchronization positions recorded in the target log file.

Here, all target statements may be searched from the target log file based on the preset table name, and each data synchronization position recorded in the target log file is determined according to all the target statements.

Exemplarily, since the data synchronization positions have the partial order relationship, the data synchronization position with the largest order among the data synchronization positions recorded in the target log file is determined as the target data synchronization position.

Therefore, through the above implementations, the target data synchronization position can be determined by scanning the first data synchronization position recorded in the log file, without scanning all positions of the log file, which can not only improve the scanning speed, but also save computing resources.

In some implementations, in step 110, a first target statement recorded in each log file may be searched from each log file of the database based on a preset table name, and then the target data synchronization position is determined based on the data synchronization position carried in the searched target statement.

Here, the first target statement recorded in each log file may be searched from each log file by matching the preset table name with each statement recorded in the log file.

Due to the partial order relationship between the data synchronization positions, the first target statement found in the log file is recorded with the first data synchronization position recorded in the log file.

At this time, the target log file may be determined from each log file according to the order corresponding to each first data synchronization position, and then the target data synchronization position is determined from each data synchronization position according to the order of each data synchronization position recorded in the target log file.

Therefore, through the above implementation, the target data synchronization position can be quickly and accurately determined in the log file by searching the preset table name.

It should be noted that by executing the target statement belonging to the data definition language type in the data synchronization process periodically, the data synchronization method based on a database provided in the embodiments of the present disclosure can not only provide a solution for recording the logical position for the low version of the MySQL database, but also support the data breakpoint resumption in the scenario of the master-slave switch through the checkpoint mechanism of the DDL statement, so as to ensure that the data consistency and integrity can be guaranteed. In addition, the data synchronization method based on a database provided in the embodiments of the present disclosure is also applicable to the master-slave replication scenario. In the scenario where the transaction identification (ID) is not inherited, the data synchronization position can also be recorded based on the target statement of the data definition language type provided in the embodiments of the present disclosure. Moreover, when the target statement of the data definition language type is the statement of DROP TABLE IF EXISTS, the user is not aware of it, which greatly improves the user experience.

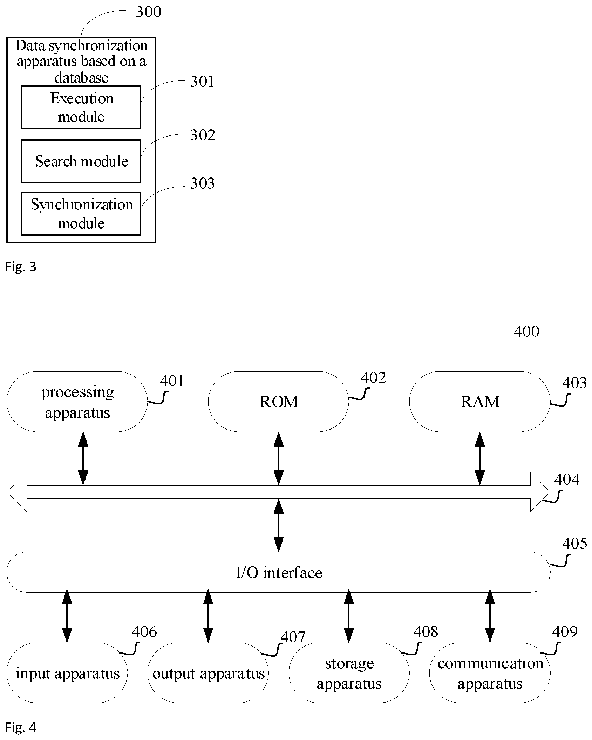

Fig. 3 is a structural diagram of a data synchronization apparatus based on a database according to some embodiments. As shown in Fig. 3, the embodiments of the present disclosure provide a data synchronization apparatus 300 based on a database, and the data synchronization apparatus 300 based on a database includes:
an execution module 301, configured to execute, in the database, a target statement carrying a current data synchronization position, to write the current data synchronization position into a log file of the database through the target statement, where the target statement is a statement of a data definition language type;
a search module 302, configured to search in the log file of the database to obtain a target data synchronization position in response to data breakpoint resumption being performed, the target data synchronization position is the current data synchronization position recorded when data synchronization is interrupted last time; and
a synchronization module 303, configured to perform data synchronization based on the target data synchronization position.

Optionally, the target statement includes a current data synchronization position and a target table name, a table corresponding to the target table name does not belong to the database, and the target statement is used to instruct to delete the corresponding table based on the target table name; and
the execution module 301 is further configured to:
execute the target statement in the database to delete the table corresponding to the target table name.

Optionally, the target statement includes a current data synchronization position and a specified table name, and the target statement is used to instruct to create a corresponding table based on the specified table name; and
the execution module 301 is further configured to:
execute the target statement in the database to create a table corresponding to the specified table name in the database.

Optionally, the execution module 301 is further configured to:
periodically acquire the current data synchronization position in a data synchronization process;
construct the target statement based on a preset table name and the current data synchronization position; and
execute the target statement in the database to write the target statement into the log file of the database.

Optionally, the search module 302 is further configured to:
scan respective log files of the database to obtain first data synchronization positions recorded in each log files;
determine a target log file from the respective log files according to an order corresponding to the first data synchronization positions; and
determine the target data synchronization position from respective data synchronization position according to an order of the respective data synchronization positions recorded in the target log file.

Optionally, the target statement further includes a preset table name; and the search module 302 is further configured to:
searching in each log file of the database to obtain a first target statement recorded in each log file based on the preset table name; and
determining the target data synchronization position based on a data synchronization position carried in the target statement searched.

For the logic of the method executed by each functional module in the above data synchronization apparatus 300 based on a database, reference may be made to the part related to the method in the above embodiments, which will not be repeated here.

Reference is made to Fig. 4 below, which illustrates a structural diagram of an electronic device 400 suitable for implementing the embodiments of the present disclosure. The electronic device in the embodiments of the present disclosure may be a server, for example, the server may be a server where the database is located. The electronic device shown in Fig. 4 is only an example, and should not impose any limitation on the function and usage scope of the embodiments of the present disclosure.

As shown in Fig. 4, the electronic device 400 may include a processing apparatus (such as a central processing unit, a graphics processor, etc.) 401, which can perform various appropriate actions and processing according to a program stored in a read-only memory (ROM) 402 or a program loaded from a storage apparatus 408 into a random-access memory (RAM) 403. In the RAM 403, various programs and data required for the operation of the electronic device 400 are also stored. The processing apparatus 401, the ROM 402 and the RAM 403 are connected to each other through a bus 404. An input/output (I/O) interface 405 is also connected to the bus 404.

Generally, the following apparatus may be connected to the I/O interface 405: an input apparatus 406 including, for example, a touchscreen, a touchpad, a keyboard, a mouse, a camera, a microphone, an accelerometer, a gyroscope, etc.; an output apparatus 407 including, for example, a liquid crystal display (LCD), a speaker, a vibrator, etc.; a storage apparatus 408 including, for example, a magnetic tape, a hard disk, etc.; and a communication apparatus 409. The communication apparatus 409 may allow the electronic device 400 to perform wireless or wired communication with other devices to exchange data. Although Fig. 4 shows the electronic device 400 having various apparatuses, it should be understood that not all of the illustrated apparatuses are required to be implemented or provided. Alternatively, more or fewer apparatuses may be implemented or provided.

In particular, according to the embodiments of the present disclosure, the process described above with reference to the flowchart can be implemented as a computer software program. For example, an embodiment of the present disclosure includes a computer program product, which includes a computer program carried on a non-transitory computer-readable medium, and the computer program includes program codes for executing the method shown in the flowchart. In such an embodiment, the computer program may be downloaded and installed from a network through the communication apparatus 409, or installed from the storage apparatus 408, or installed from the ROM 402. When the computer program is executed by the processing apparatus 401, the above-mentioned functions defined in the method of the embodiments of the present disclosure are executed.

It should be noted that the above computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection with one or more wires, a portable computer magnetic disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program, and the program may be used by or in combination with an instruction execution system, apparatus or device. In the present disclosure, the computer-readable signal medium may include a data signal propagated in a baseband or as a part of a carrier wave, and computer-readable program codes are carried therein. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium may send, propagate or synchronize a program used by or in combination with the instruction execution system, apparatus or device. The program codes contained on the computer-readable medium may be synchronized by any suitable medium, including but not limited to an electric wire, an optical cable, a radio frequency (RF), or any suitable combination thereof.

In some implementations, the server can communicate using any currently known or future developed network protocol, such as HyperText Transfer Protocol (HTTP), and can be interconnected with any form or medium of digital data communication (such as a communication network). Examples of communication networks include a local area network ("LAN"), a wide area network ("WAN"), an internet (for example, the Internet), a peer-to-peer network (for example, an ad hoc peer-to-peer network), and any currently known or future developed network.

The above computer-readable medium may be included in the above electronic device, or may exist alone without being assembled into the electronic device.

The above computer-readable medium carries one or more programs, and when the one or more programs are executed by the electronic device, the electronic device is caused to: execute, in the database, a target statement carrying a current data synchronization position, to write the current data synchronization position into a log file of the database through the target statement, where the target statement is a statement of a data definition language type; when data breakpoint resumption is performed, search the log file of the database to obtain a target data synchronization position, where the target data synchronization position is the current data synchronization position recorded when data synchronization was interrupted last time; and perform data synchronization based on the target data synchronization position.

The computer program codes for executing the operations of the present disclosure may be written in one or more programming languages or a combination thereof. The above-mentioned programming languages include object-oriented programming languages such as Java, Smalltalk, C++, and also conventional procedural programming languages such as "C" language or similar programming languages. The program codes may be executed entirely on a user's computer, partly on a user's computer, as a stand-alone software package, partly on a user's computer and partly on a remote computer, or entirely on a remote computer or server. In the scenario related to the remote computer, the remote computer may be connected to the user's computer through any kind of network, including a local area network (LAN) or a wide area network (WAN), or the connection may be made to an external computer (for example, through the Internet using an Internet service provider).

The flowcharts and block diagrams in the drawings illustrate the possible architecture, functionality, and operation of the system, method and computer program product according to various embodiments of the present disclosure. In this regard, each block in the flowcharts or block diagrams may represent a module, a program segment, or a part of codes, and the module, the program segment, or the part of codes contains one or more executable instructions for implementing specified logical functions. It should also be noted that, in some alternative implementations, the functions noted in the blocks may also occur out of the order noted in the drawings. For example, two blocks shown in succession may, in fact, be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules described in the embodiments of the present disclosure may be implemented in software or hardware. The name of a module does not constitute a limitation on the module itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

The above description is merely preferred embodiments of the present disclosure and an illustration of the applied technical principles. Those skilled in the art should understand that the scope of disclosure involved in the present disclosure is not limited to the technical solution formed by the specific combination of the above technical features, and should also cover other technical solutions formed by any combination of the above technical features or equivalent features thereof without departing from the above disclosed concept, for example, technical solutions formed by replacing the above features with technical features having similar functions disclosed in the present disclosure (but not limited to).

In addition, although operations are depicted in a specific order, this should not be construed as requiring these operations to be performed in the specific order shown or in a sequential order. Under certain circumstances, multitasking and parallel processing may be advantageous. Similarly, although the above discussion includes several specific implementation details, these should not be construed as limiting the scope of the present disclosure. Certain features that are described in the context of separate embodiments can also be implemented in combination in a single embodiment. Conversely, various features that are described in the context of a single embodiment can also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. Rather, the specific features and actions described above are merely exemplary forms of implementing the claims. Regarding the apparatus in the above embodiments, the specific manner in which each module performs operations has been described in detail in the embodiments related to the method, and will not be described in detail here.

## Claims

1. A data synchronization method based on a database, comprising:
executing, in the database, a target statement carrying a current data synchronization position, to write the current data synchronization position into a log file of the database through the target statement, wherein the target statement is a statement of a data definition language type (110);
searching in the log file of the database to obtain a target data synchronization position in response to data breakpoint resumption being performed, wherein the target data synchronization position is the current data synchronization position recorded when data synchronization is interrupted last time (120); and
performing data synchronization based on the target data synchronization position (130).

2. The method according to claim 1, wherein the target statement comprises the current data synchronization position and a target table name, a table corresponding to the target table name does not belong to the database, and the target statement is used to instruct to delete a corresponding table based on the target table name; and
the executing, in the database, a target statement carrying a current data synchronization position comprises:
executing the target statement in the database to delete the table corresponding to the target table name.

3. The method according to claim 1, wherein the target statement comprises the current data synchronization position and a specified table name, the target statement is used to instruct to create a corresponding table based on the specified table name; and
the executing, in the database, a target statement carrying a current data synchronization position comprises:
executing the target statement in the database to create a table corresponding to the specified table name in the database.

4. The method according to claim 1, wherein the executing, in the database, a target statement carrying a current data synchronization position comprises:
periodically acquiring the current data synchronization position in a data synchronization process;
constructing the target statement based on a preset table name and the current data synchronization position; and
executing the target statement in the database to write the target statement into the log file of the database.

5. The method according to any one of claims 1 to 4, wherein the searching the log file of the database to obtain a target data synchronization position comprises:
scanning respective log files of the database to obtain first data synchronization positions recorded in the respective log files;
determining a target log file from the respective log files according to an order corresponding to the first data synchronization positions; and
determining the target data synchronization position from respective data synchronization positions according to an order of the respective data synchronization positions recorded in the target log file.

6. The method according to any one of claims 1 to 4, wherein the target statement comprises a preset table name; and
the searching in the log file of the database to obtain a target data synchronization position comprises:
searching in each log file of the database to obtain a first target statement recorded in each log file based on the preset table name; and
determining the target data synchronization position based on a data synchronization position carried in the target statement searched.

7. A data synchronization apparatus (300) based on a database, comprising:
an execution module (301), configured to execute, in the database, a target statement carrying a current data synchronization position, to write the current data synchronization position into a log file of the database through the target statement, wherein the target statement is a statement of a data definition language type;
a search module (302), configured to search in the log file of the database to obtain a target data synchronization position in response to data breakpoint resumption being performed, wherein the target data synchronization position is the current data synchronization position recorded when data synchronization is interrupted last time; and
a synchronization module (303), configured to perform data synchronization based on the target data synchronization position.

8. A computer-readable medium, storing a computer program thereon, wherein the computer program, when executed by a processing apparatus, implements the steps of the method according to any one of claims 1 to 6.

9. An electronic device, comprising:
a storage apparatus, storing a computer program thereon; and
a processing apparatus, configured to execute the computer program in the storage apparatus, to implement the steps of the method according to any one of claims 1 to 6.
